Europäisches Patentamt

European Patent Office

Office européen des brevets

(19)

(11) Veröffentlichungsnummer: **0 280 255**

**A2**

(12) **EUROPÄISCHE PATENTANMELDUNG**

(21) Anmeldenummer: **88102639.7**

(51) Int. Cl.⁴: **G02B 6/44**

(22) Anmeldetag: **23.02.88**

(30) Priorität: **24.02.87 DE 3705821**

(43) Veröffentlichungstag der Anmeldung:
**31.08.88 Patentblatt 88/35**

(84) Benannte Vertragsstaaten:
**AT BE CH DE FR GB IT LI NL**

(71) Anmelder: **Standard Elektrik Lorenz
Aktiengesellschaft
Lorenzstrasse 10
D-7000 Stuttgart 40(DE)**

(72) Erfinder: **Grögl, Ferdinand
Dürrenstrasse 42
D-7141 Oberstenfeld(DE)**

(74) Vertreter: **Graf, Georg Hugo, Dipl.-Ing. et al
Standard Elektrik Lorenz AG Patent- und
Lizenzwesen Postfach 30 09 29
D-7000 Stuttgart 30(DE)**

(54) **Optisches Kabelelement optische Bündelader und optisches Kabel.**

(57) Es ist ein optisches Kabelelement (10) beschrieben, das mehrere Lichtwellenleiter (1) und
gegebenenfalls mehrere längslaufende Polsterelemente (2) und/oder zug-und/oder stauchfeste
Längsfäden (3) aufweist, die durch querlaufende
Kunststoffbändchen (4) zu einem Band verwebt sind.
Derartige optische Kabelelemente können wendelförmig oder zu Bandstapeln zusammengefaßt in
Hohlräumen von Kabeln lose angeordnet sein. Mehrere Bündeladern und optische Kabel, darunter auch
ein Flachkabel sind beschrieben.

*10*

*Fig 1*

EP 0 280 255 A2

## Optisches Kabelelement optische Bündelader und optisches Kabel

Die Erfindung bezieht sich auf ein optisches Kabelelement mit mehreren längslaufenden Lichtwellenleitern, die durch querlaufende Fäden zu einem Band verwebt sind, und auf optische Kabel, die mindestens ein derartiges optisches Kabelelement enthalten.

Aus der DE-OS 28 54 746 ist ein optisch/elektrisches Kabel bekannt, bei dem ein optisches Kabelelement bestehend aus mehreren Lichtwellenleitern, die an einem Haltebauteil befestigt sind, innerhalb eines Rohres lose angeordnet ist.

Der Erfindung liegt die Aufgabe zugrunde ein optisches Kabelelement anzugeben, das universell bei verschiedenen Konstruktionen optischer Kabel einsetzbar ist.

Das neue Kabelelement ist zug-und stauchfest und flexibel, sodaß bei der Weiterverarbeitung zu optischen Kabeln und in optischen Kabeln mechanische Beanspruchungen von den Lichtwellenleitern ferngehalten sind. Durch Zusammenfassen mehrerer Kabelelemente lassen sich hohe Packungsdichten erreichen, wodurch entsprechend dünne optische Kabel möglich sind.

Die Erfindung wird nachstehend anhand eines Ausführungsbeispiels eines optischen Kabelelements und mehrerer Ausführungsbeispiele für optische Kabel beschrieben. Es zeigt:

Fig. 1 ein neues optisches Kabelelement

Fig. 2 einen Aufbau eines optischen Kabels mit einem ersten Aufbau einer Bündelader

Fig. 3 einen zweiten Aufbau einer Bündelader

Fig. 4 einen dritten Aufbau einer Bündelader

Fig. 5 ein Flachkabel.

Weitere Ausführungen sind in der Beschreibung enthalten.

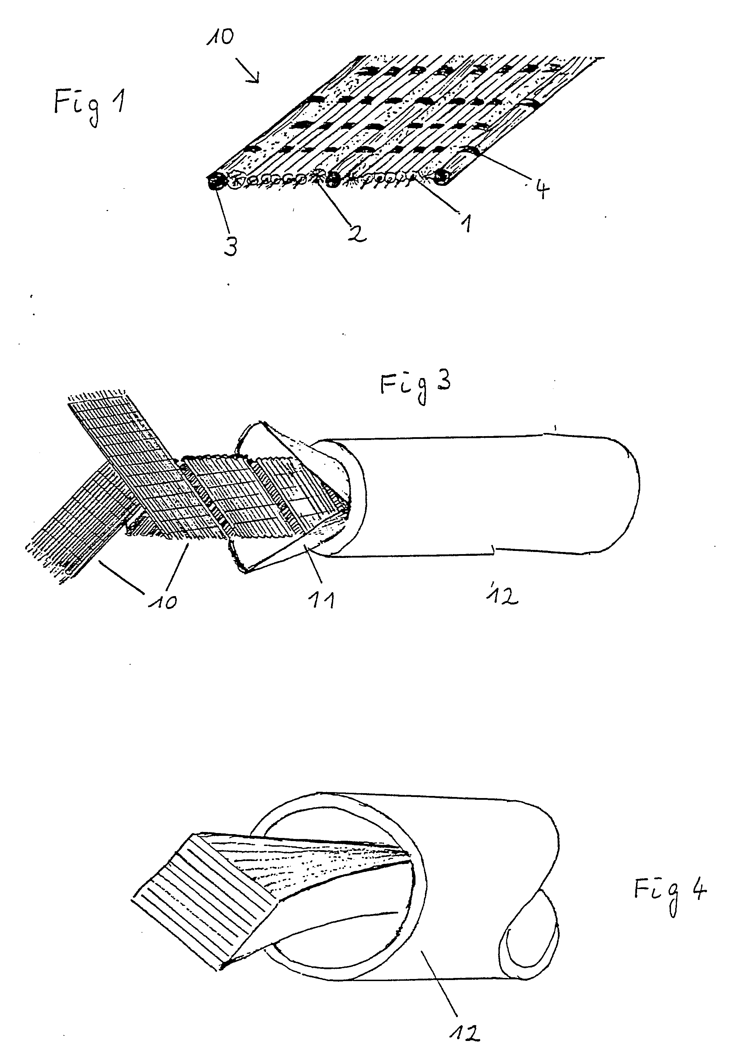

Das optische Kabelelement 10 gemäß Fig. 1 auch Lichtwellenleiter-Webbändchen genannt weist zehn Lichtwellenleiter 1, vier Polsterelemente 2 und drei zug-und stauchfeste Elemente 3 auf, die durch querlaufende Schußfäden 4 zu einem Band verwebt sind. Dabei sind die zug-und stauchfesten Elemente 3 an den Rändern bzw. in der Mitte des Bandes und die Polsterelemente 2 zwischen den zug-und stauchfesten Elementen 3 und den Lichtwellenleitern 1 angeordnet. Vorzugsweise ist das Band so gewebt, daß die Lichtwellenleiter mit einem kleinen Abstand voneinander angeordnet sind. Die Schußfäden 4 können einen Abstand von einigen mm voneinander aufweisen. Sie sind zumindest mit den am Rand des Bandes befindlichen zug-und stauchfesten Elementen 3 verklebt, die zu diesem Zweck mit einem geeigneten Schmelzkleber, beispielsweise TPX 20-030 der Fa. Henkel, beschichtet sind.

Die zug-und stauchfesten Elemente 3 bestehen aus aramid-oder glasfaserverstärktem Kunststoff oder einem Liquid-Crystal-Polymer. Als Polsterelemente 2 finden vorzugsweise Flockgarne Verwendung, deren Durchmesser auch größer sein kann als der der Lichtwellenleiter 1. Die Schußfäden 4 bestehen vorzugsweise aus schmalen Kunststoffbändchen aus Polyester.

Bei anderen Ausführungen sind 5n Lichtwellenleiter 1, n + 1 zug-und stauchfeste Elemente 3 und 2n Polsterelemente 2 in entsprechender Weise wie oben beschrieben angeordnet, wobei immer je fünf Lichtwellenleiter 1 nebeneinander liegen. Je nach geforderter Zug-und Stauchfestigkeit sind auch andere Ausführungen möglich, beispielsweise können gegebenenfalls die Polsterelemente 2 und/oder die zug-und stauchfesten Elemente 3 ganz weggelassen sein, oder statt der zug-und stauchfesten Elemente 3 zug-oder stauchfeste Elemente vorgesehen sein.

Es können in einem Webvorgang gleichzeitig mehrere optische Kabelelemente hergestellt werden, indem nach dem Verkleben der Querfäden mit den schmelzkleberbeschichteten Längselementen durch Schneidwalzen die Querfäden an vorbestimmten Stellen durchtrennt werden, sodaß aus einem breiten mehrere schmalere optische Kabelemente entstehen.

Fig. 2 zeigt den Aufbau eines optischen Kabels mit einer ersten Bündelader bestehend aus einem extrudierten Rohr 12, das durch ein gewickeltes Quellband (beispielsweise K3313 von der Fa. Freudenberg) 11 ausgekleidet ist, und in dem ein optisches Kabelelement 10 wendelförmig angeordnet ist. Das extrudierte Rohr 12 ist mit einem längslaufenden Quellband 13 umgeben. Auch das Quellband 11 kann längslaufend überlappend angeordnet sein. Darüber befinden sich zwei gegensinnig gewickelte Lagen 14, 15 aus Aramid-oder anderen zugfesten Fäden, die mit einem Heißkleber beschichtet sind. Bei der Kabelherstellung verkleben die zugfesten Fäden miteinander und mit einem Aluminiumband 16 das auf der Lage 15 und unter einem Kunststoffmantel 17 angeordnet ist.

Eine zweite optische Bündelader weist gemäß Fig. 3 ebenfalls ein extrudiertes Rohr 12 auf, das mit einem Quellband 11 ausgekleidet ist. Darin befinden sich zwei optische Kabelelemente 10, die in Hohlrohrbebänderungstechnik gegensinnig auf Lücke gewickelt sind. Das Innere der Bündelader kann mit einer Füllmasse gefüllt sein, und/oder eine zentrale Quellkordel enthalten. Auf die Bündelader kann ein anderer oder derselbe zugfeste Kabelmantel aufgebracht sein wie bei Figur 2 beschrieben.

Bei einer dritten Bündelader gemäß Fig. 4 ist in einem extrudierten Kunststoffrohr 12 ein Stapel aus zehn optischen Kabelelementen lose angeordnet. Der Stapel kann tordiert sein, um die Flexibilität der Kabelseele zu erhöhen. Auf die Bündelader kann ein anderer oder derselbe zugfeste Kabelmantel aufgebracht sein wie bei Figur 2 beschrieben.

Die in den Figuren 2 bis 4 beschriebenen Bündeladern können auch als optische Grundbündel angesehen werden, von denen mehrere zu einem Hauptbündel zusammengefaßt und von einem gemeinsamen Kabelmantel umgeben sein können.

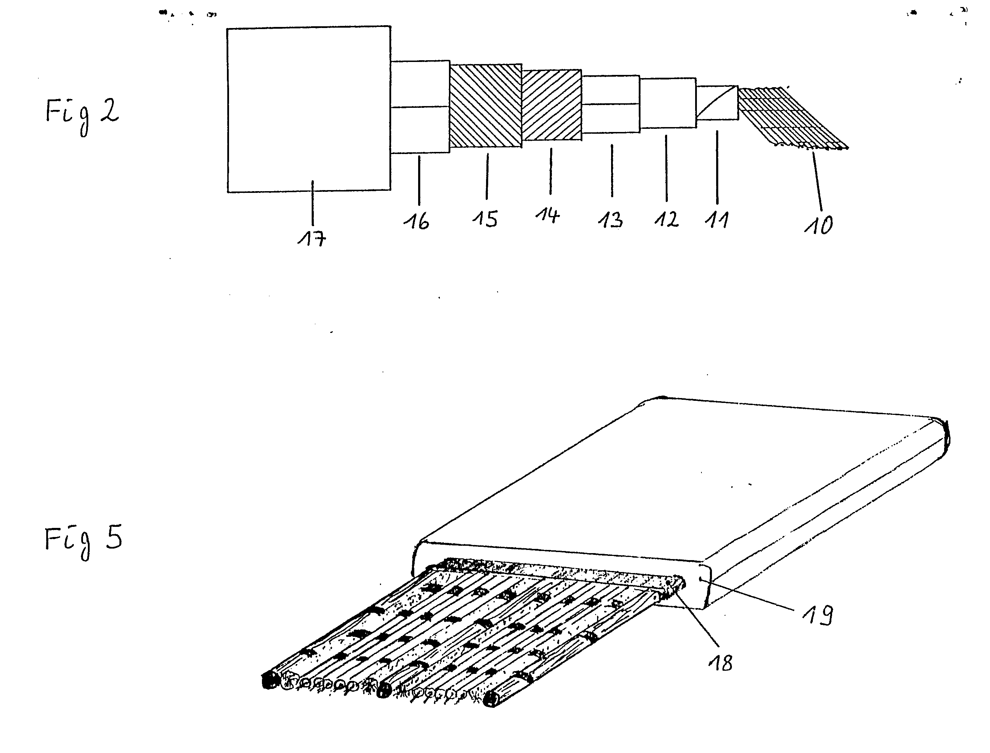

Fig. 5 zeigt ein optisches Flachkabel, das aus einem mit einer Bewicklung 18, beispielsweise einer Polyester-Schaumfolie, umgebenen optischen Kabelelement und einem Kunststoffmantel 19 besteht.

Bei weiteren Ausführungen optischer Kabel ist ein oder sind mehrere optische Kabelelemente in Hohlräumen des Kabels (wie beispielsweise bei Open-channel-Kabeln) angeordnet.

## Ansprüche

1. Optisches Kabelelement mit zumindest einem längslaufenden Lichtwellenleiter (1) und gegebenenfalls mindestens einem weiteren längslaufenden Element, **dadurch gekennzeichnet**, daß diese durch querlaufende Fäden (4) zu einem Band verwebt sind.

2. Optisches Kabelelement nach Anspruch 1, dadurch gekennzeichnet, daß das Band ferner zug- und/oder stauchfeste Längsfäden (3) und/oder Polsterelemente (2) enthält.

3. Optisches Kabelelement nach Anspruch 1 oder 2, dadurch gekennzeichnet, daß sich zumindest an den Rändern des Bandes längslaufende Elemente befinden, die mit den querlaufenden Fäden (4) verklebt sind.

4. Optisches Kabelelement nach Anspruch 3, dadurch gekennzeichnet, daß das Band zwei zug- und/oder stauchfeste Längsfäden (3) an seinen Rändern, daneben je ein Polsterelement (2) und zwischen diesen mehrere Lichtwellenleiter (1) aufweist.

5. Optisches Kabelelement nach Anspruch 4, dadurch gekennzeichnet, daß zwischen den Lichtwellenleitern (1) mindestens ein zug-und/oder stauchfester Längsfaden (3) und an dessen beiden Seiten je ein Polsterelement (2) angeordnet ist.

6. Optisches Kabel enthaltend mindestens ein optisches Kabelelement (10) nach einem der vorhergehenden Ansprüche.

7. Optisches Kabel nach Anspruch 6, dadurch gekennzeichnet, daß das optisches Kabelelement (10) lose in einem Hohlraum angeordnet ist.

8. Optisches Kabel nach Anspruch 6 oder 7, dadurch gekennzeichnet, daß mindestens ein optisches Kabelelement wendelförmig im Inneren eines Rohres (12) angeordnet ist.

9. Optisches Kabel nach Anspruch 6 oder 7 oder 8, dadurch gekennzeichnet, daß mehrere optische Kabelelemente zu einem Bandstapel zusammengefaßt sind.

10. Verfahren zum Herstellen von optischen Kabelelementen nach einem der Ansprüche 1 bis 5, dadurch gekennzeichnet, daß zuerst in einem Webvorgang ein breites Kabelelement hergestellt wird aus dem danach durch Durchtrennen der querlaufenden Fäden an vorbestimmten Stellen mehrere, schmalere Kabelemente entstehen.

Fig 1

Fig 3

Fig 4

Fig 2

17    16    15    14    13    12    11    10

Fig 5

19

18